**Europäisches Patentamt**

**European Patent Office**

**Office européen des brevets**

(11) Veröffentlichungsnummer: **0 153 296**
**A2**

# EUROPÄISCHE PATENTANMELDUNG

(21) Anmeldenummer: **85890024.4**

(22) Anmeldetag: **01.02.85**

(51) Int. Cl.⁴: **C 22 B 1/00, C 22 B 7/00,**
**C 22 B 34/12**

(30) Priorität: **03.02.84 AT 359/84**

(43) Veröffentlichungstag der Anmeldung: **28.08.85**
**Patentblatt 85/35**

(84) Benannte Vertragsstaaten: **DE FR GB IT**

(71) Anmelder: **Kos, Bernd, Dipl.-Ing., Endresgasse 11,**
**A-8700 Leoben (AT)**

(72) Erfinder: **Kos, Bernd, Dipl.-Ing., Endresgasse 11,**
**A-8700 Leoben (AT)**

(74) Vertreter: **Noske, Wolfgang, Dipl.-Ing.,**
**Hamerlinggasse 19, A-2340 Mödling (AT)**

(54) **Verfahren und Anlage zum Aufbereiten von Spänen aus der Bearbeitung von Titanwerkstücken.**

㊲ Es werden ein Verfahren und eine Anlage zum Aufbereiten von Spänen aus der Bearbeitung von Titanwerkstükken für den nachfolgenden schmelzmetallurgischen Einsatz beschrieben. Die als Abfall angefallenen Titanspäne werden im Durchlauf durch den trichterartig in einen Schlitz mündenden Pressenraum vorverdichtet und nach dem Austreten aus dem Schlitz zwischen gegenläufigen Walzen eingezogen und im Walzenspalt zu einem Strang mit einer Dichte von 1,5 bis 3,5 g/cm³, vorzugsweise 2,4 bis 2,8 g/cm³, gepresst. Für die Weiterbehandlung des so hergestellten Stranges werden zwei Möglichkeiten beschrieben:

Der Strang kann unter Schutzgas auf eine Mindesttemperatur von 600° C erhitzt und bei dieser Temperatur zwischen weiteren gegenläufigen Walzen bis zu einer Dichte von 3,0 bis 4,4 g/cm³, vorzugsweise 3,3 bis 3,8 g/cm³, weiter verdichtet werden; nach darauffolgender Abkühlung wenigstens auf etwa 400° C tritt er aus der Schutzgasatmosphäre heraus und kann aufgehaspelt oder in Teile der für den schmelzmetallurgischen Einsatz benötigten Länge geschnitten werden.

Die zwei Möglichkeit sieht vor, den Strang einem unter Schutzgas stehenden Reaktor zuzuführen und dort mittels eines Plasmastrahles oder Lichtbogens zu schmelzen; dabei fallen die Schmelzentropfen zum Boden des Reaktors und bilden dort einen zusammenhängenden Metallkuchen

Die Erfindung betrifft ein Verfahren zum Aufbereiten von Spänen aus der Bearbeitung von Titanwerkstücken für den nachfolgenden schmelzmetallurgischen Einsatz, wobei die Titanspäne in einem Pressenraum mechanisch verdichtet werden.

Bei der Herstellung und Bearbeitung von Titanwerkstücken, z.B. in der Luft- und Raumfahrtindustrie, wo z.B. Fahrwerks- und Triebwerksteile, Rotoköpfe für Hubschrauber usw. aus Titan hergestellt werden, fallen vielfach bis zu 90% des in Form von Schmiedeblöcken benötigten Titan-Rohmaterials wieder in Form von Schleifstaub, Spänen oder Stückschrott als Abfall an. Da Titan ein kostspieliger Rohstoff ist, ist man bestrebt, den Schrott und die Späne möglichst zur Gänze einer Wiederverwertung zuzuführen.

Stückschrott wird unter Schutzgas oder durch Elektronenstrahlschweissen zu kompakten Stäben zusammengeschweißt, die als verzehrende Elektroden im Vakuum-Lichtbogenofen eingesetzt und umgeschmolzen werden.

Bei Spänen ist die Wiederverwertung erschwert durch den hohen Schmelzpunkt des Titans einerseits und dessen hohe Affinität zum Sauerstoff andererseits. Es ist bekannt, Späne nach dem Reinigen und Abbeizen gemeinsam mit gröberem Titanschrott und Titanschwamm in einem speziellen Vakuum-Schmelzaggregat mit zweistufiger Chargiereinrichtung und rotierender, wassergekühlter, sich nicht verzehrender Elektrode zu schmelzen und das Titan weiter im Vakuum in Form eines Elektrodenstabes abzugießen ("Rotel-Verfahren"). Je nach den Qualitäts- und Reinheitsanforderungen wird der hergestellte Elektrodenstab dann noch ein- oder zwei- bis dreimal im Vakuum umgeschmolzen und so der endgültige Titanblock als Rohmaterial für Titanwerkstücke erhalten. Der Aufwand ist groß und es können nach diesem Verfahren keine feinen Späne, sondern nur sehr grobe Späne gemeinsam mit Stückschrott und/oder Titanschwamm verarbeitet werden. Feine Späne würden zu Schwierigkeiten bei der Beschickung des Schmelzaggregates und in diesem selbst führen, weil sie auf der Schmelze schwimmen und dort zur Ausbildung von unerwünschten Sekundärlichtbögen führen.

- 3 -

Es ist im weiteren bekannt, Titanspäne dadurch wieder verwertbar zu machen, daß sie nach der Reinigung in dem Pressenraum einer bekannten Hydraulikpresse zu Paketen gepreßt werden. Die Pakete bestehen aus so stark verdichteten Spänen, daß mehrere entsprechend geformte Pakete zu einem Stab zusammengesetzt und miteinander zur Bildung einer Stabelektrode verschweißt werden können. Dafür ist eine relativ große Dichte der hergestellten Preßlinge von mehr als 3g/cm3 nötig und es können nur grobe Späne als Ausgangsmaterial eingesetzt werden. Ein großer Anteil der vorhandenen Titanspäne, nämlich alle feinen Späne, bleibt unverwertbar.

Es ist schließlich bekannt (DE-OS 18 14 471), das Einschmelzen von feinen Metallabfällen durch Verdichten unter Luftabschluß und durch Erhitzen in einer an einen Schmelzofen angebauten Vorbehandlungsanlage zu unterstützen. Nachteilig ist vor allem die Aufwendigkeit der Anlage, die bei der Herstellung von Titan-Rohmaterial zusätzlich zu einer üblichen Vakuum-Schmelzanlage notwendig ist.

Der Erfindung liegt die Aufgabe zugrunde, ein einfaches Verfahren zum Aufbereiten von Spänen aus der Bearbeitung von Titanwerkstücken für den nachfolgenden schmelzmetallurgischen Einsatz bereitzustellen, bei dem Späne aller vorhandenen Größen verwertbar sind.

Diese Aufgabe wird bei einem Verfahren der eingangs bezeichneten Art dadurch gelöst, daß die Titanspäne im Durchlauf durch den trichterartig in einen Schlitz mündenden Pressenraum vorverdichtet und nach dem Austreten aus dem Schlitz zwischen gegenläufigen Walzen eingezogen und im Walzenspalt zu einem Strang mit einer Dichte von 1,5 bis 3,5g/cm3, vorzugsweise 2,4 bis 2,8 g/cm3, gepreßt werden.

Zur Herstellung von Schmelzenbehandlungs- bzw. Legierungszusatz- oder Sonderdesoxidationsmitteln, welche neben Titan weitere Elemente, z.B. Bor und/oder Zirkon enthalten, können die Titanspäne vor der Verdichtung mit einem Schlamm in Berührung gebracht werden, der die gewünschten Zusatzelemente in Pulverform suspendiert in einem Bindemittel enthält. Die Titanspäne können z.B. in einen Schlamm eingetaucht werden, der aus Melasse oder Kalkmilch und darin eingerührten, pulverförmigen Zusatzelementen besteht. Bei der Schmelztemperatur der Titanspäne verflüchtigt die Melasse bzw. bildet sich

0153296

- 4 -

aus Kalkmilch eine unschädliche Schlacke. Je höher die Viskosität des mit dem Titanspänen in Berührung gebrachten Schlammes ist, umso mehr Schlamm bleibt an den Spänen haften; durch Veränderung der Viskosität kann somit die Zusammensetzung des hergestellten Schmelzenbehandlungsmittels beeinflußt werden. Selbstverständlich können die gewünschten Zusatzelemente den Titanspänen auch in Form von Spänen der betreffenden Elemente zugemischt werden.

Eine einfache Variante des erfindungsgemäßen Verfahrens sieht vor, daß der Strang unter Schutzgas auf eine Mindesttemperatur von 600°C erhitzt und bei dieser Temperatur zwischen weiteren gegenläufigen Walzen bis zu einer Dichte von 3,0 bis 4,4 g/cm3, vorzugsweise 3,3 bis 3,8 g/cm3, weiter verdichtet und erst nach einer Abkühlung auf wenigstens 400°C aus der Schutzgasatmosphäre heraustritt und aufgehaspelt oder in Teile der für den schmelzmetallurgischen Einsatz benötigten Länge geschnitten wird. Die so hergestellten Strangstücke können problemlos als Einsatz für das erwähnte spezielle Vakuum-Schmelzaggregat mit rotierender Elektrode verwendet werden; sie können auch zu einem Elektrodenstab zusammengesetzt und verschweißt bzw. auf einen konventionell hergestellten Elektrodenstab außen zur Herstellung eines dickeren Elektrodenstabes aufgeschweißt werden. Ebenso ist der Einsatz der Strangstücke zur Herstellung eines Titan und gegebenenfalls weitere Elemente enthaltenden Schmelzenbehandlungs- bzw. Legierungszusatz- oder Sonderdesoxidationsmittels, z.B. in einer Vakuumschmelzpfanne, möglich bzw. die direkte Verwendung der Strangstücke als Legierungszusatz z.B. zu Stahl.

Wichtig bei der erwähnten Variante des erfindungsgemäßen Verfahrens ist, daß die Erhitzung zu einem Weichglühen der Späne führt, d.h., zu einer Beseitung der durch die Kaltverformung beim Zerspanen des Titans bewirkten Verfestigung. Die bei der Erhitzung erreichte Duchschnittstemperatur des Stranges ist so bemessen, daß die Späne im Inneren des Stranges die für das Weichglühen notwendige Mindesttemperatur von etwa 600° C und die an der Oberfläche des Stranges befindlichen Späne maximal die für ein oberflächiges Anschmelzen bzw. Zusammensintern notwendige entsprechend höhere Oberflächentemperatur von etwa 1700°C erreichen.

Eine andere Variante des erfindungsgemäßen Verfahrens sieht vor, daß der, bevorzugt mit einer Dichte von 1,5 bis 3,5 g/cm3, vorzugs-

- 5 -

weise von 2,4 bis 2,8 g/cm3, gepreßte Strang einem unter Schutzgas stehenden Reaktor seitlich zugeführt und dort mittels eines auf ihn gerichteten Plasmastrahles oder Lichtbogens geschmolzen wird und die Schmelzentropfen zum Boden des Reaktors fallen. Dabei kann die Schmelze am Boden des Reaktors erstarren gelassen und ein zusammenhängender Metallkuchen hergestellt werden. Es ist aber auch möglich, daß die Schmelzentropfen während des Falls zum Boden des Reaktors erstarren gelassen werden und ein loses Granulat des Metalls hergestellt wird. Wann die Erstarrung stattfindet, ist abhängig von der Fallhöhe der Schmelzentropfen, d.h. von der Bauhöhe des Reaktors. Die Erstarrung kann durch entsprechende Anordnung von Prallblechen im Inneren des Reaktors oder durch Einleitung von Schutzgas in den Reaktor im Gegenstrom zu den fallenden Schmelzentropfen beschleunigt werden.

Zur Herstellung von Schmelzenbehandlungs- bzw. Legierungszusatz- oder Sonderdesoxidationsmitteln, welche neben Titan weitere Metalle enthalten, z.B. von Ferrotitan, kann vorzugsweise dem Plasmastrahl oder Lichtbogen ein gemeinsam mit den Titanspänen im Reaktor zu schmelzenden Metallstrang, z.B. ein Eisendraht oder -band, zugeführt werden.

Wenn ein zusammenhängender Metallkuchen hergestellt wird, so kann dieser entweder in seiner Form belassen oder durch Brechen auf die gewünschte Korngröße gebracht werden. Das Granulat oder der ganze bzw. gebrochene Metallkuchen eignet sich problemlos als Einsatz für das erwähnte spezielle Vakuum-Schmelzaggregat mit rotierender Elektrode oder zur Herstellung eines Titan und gegebenenfalls weitere Elemente enthaltenden Schmelzenbehandlungsmittels insbesondere für Stahl bzw. direkt als solches.

Die Erfindung zielt im weiteren ab auf die Schaffung einer Anlage zur Durchführung des erfindungsgemäßen Verfahrens, mit einem Pressenraum zum Verdichten der Späne und sieht dazu vor, daß der Pressenraum trichterartig in einen Schlitz mündet und daran gegenläufige Walzen mit einem Mitnehmerprofil anschließen.

Zur Durchführung der ersterwähnten Verfahrensvariante, wobei Strangstücke hergestellt werden, ist vorgesehen, daß an die Walzen ein unter Schutzgas stehender Durchlaufheiztunnel und an diesen weitere gegenläufige Walzen und eine Kühlstrecke anschließt, wobei die gesamte Anlage über den Pressenraum bis zur Kühlstrecke unter Überdruck von Schutzgas steht. Im Durchlaufheiztunnel kann zweckmäßig ein mit Argon oder Helium arbeitender Plasmabrenner für die nötige Erhitzung des Stranges auf eine Mindesttemperatur von 600°C und gleichzeitig für die Aufrechterhaltung der Schutzgasathmosphäre in der gesamten Anlage sorgen. Es ist aber auch möglich, den Strang innerhalb des Durchlaufheiztunnels mittels zwischen je zwei Elektroden verlaufenden Lichtbögen oder induktiv mittels einer den Heiztunnel umgebenden Wicklung aufzuheizen, wobei dann zusätzlich für eine entsprechende Zufuhr von Schutzgas zu sorgen ist.

Zur Durchführung der Variante des erfindungsgemäßen Verfahrens, welche ein Schmelzen des Stranges und die Herstellung eines zusammenhängenden Kuchens oder eines losen Granulats des Metalls vorsieht, schließt bei der Anlage an die Walzen vorteilhaft ein seitlich oben in einen Reaktor einmündendes Führungsrohr für den zwischen den Walzen gebildeten Strang an, wobei der Reaktor unter Überdruck von Schutzgas steht, einen Plasmabrenner oder eine Stabelektrode zur Ausbildung eines auf den Strang gerichteten Plasmastrahles bzw. Lichtbogens und einen gekühlten Unterteil aufweist, welcher das vom seitlich oben zugeführten Strang abschmelzende Metall aufnimmt und zur Entleerung vom daran dicht anschliessenden Oberteil des Reaktors abgenommen werden kann.

Für den Fall der Herstellung von Schmelzenbehandlungs- bzw. Legierungszusatzmitteln wie z.B. Ferrotitan ist vorteilhaft an den Reaktor eine Zuführungseinrichtung für einen Metallstrang, z.B. für einen Eisendraht oder für ein Eisenband, angeschlossen.

Die Erfindung wird an Hand von Ausführungsbeispielen der zur Durchführung des erfindungsgemäßen Verfahrens dienenden Anlage näher erläutert, die in der Zeichnung schematisch dargestellt sind.

Darin zeigt

Fig.1 eine erste, der Herstellung von Strangstücken aus Titanspänen dienende Ausführungsform,

Fig.2 eine zweite Ausführungsform, die der Herstellung eines Kuchens oder Granulats aus geschmolzenen Titanspänen dient und

- 7 -

Fig.3 ein Detail einer Ausführungsform einer Anlage ähnlich Fig.2 , bei der jedoch eine weitere Einrichtung ergänzt ist.

In beiden Fällen weist die Anlage zum Aufbereiten der Titanspäne einen trichterartig in einen Schlitz 1 mit rechteckigem Querschnitt mündenden Pressenraum 2 auf, in dem die Titanspäne mittels eines Pressenstempels 3 im Durchlauf vorverdichtet werden. An den Schlitz 1 schließen unmittelbar gegenläufige Walzen 4 mit einem Mitnehmerprofil an, das z.B. aus in entlang von Mantellinien der Walzen 4 in deren Nuten eingelassenen oder eingeschobenen oder auf den Mantel der Walzen 4 aufgeschweißten Leisten 5 besteht.

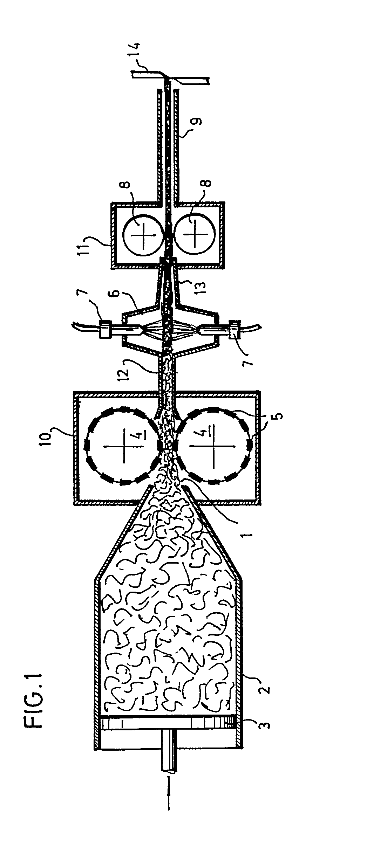

Bei der Ausführungsform nach Fig.1 schließt an die Walzen 4 ein unter Schutzgas stehender Durchlaufheiztunnel 6 mit von oben bzw. unten auf den zwischen den Walzen 4 gebildeten Strang gerichteten Plasmabrennern 7 an. Die Plasmabrenner 7 sind mit Argon oder Helium betrieben und dienen gleichzeitig der Schutzgaszufuhr. An den Durchlaufheiztunnel 6 schließen weitere gegenläufige Walzen 8 und eine Kühlstrecke 9 an, die ebenfalls noch unter Schutzgas steht. Die Kühlstrecke 9 kann dabei vom später den Plasmabrennern 7 zugeleiteten Schutzgas durchströmt sein, welches in der Kühlstrecke 9 als Kühlmittel dient. Der Durchlaufheiztunnel 6 steht mit die Walzenpaare 4 bzw. 8 gasdicht umgebenden Kammern 10 bzw. 11 über den Strang einschließende Führungsrohre 12 bzw. 13 mit dem Spalt zwischen den Walzen 4 und dem Querschnitt des Stranges entsprechendem Querschnitt in gasdichter Verbindung. In die Kammer 10 mündet der Pressenraum 2 gasdicht ein; an die Kammer 11 schließt gasdicht der Mantel der Kühlstrecke 9 an. Es steht somit die gesamte Anlage über den Pressenraum 2 bis zur Kühlstrecke 9 unter leichtem Überdruck von Schutzgas, sodaß keine Luft von außen eindringen kann. An die Kühlstrecke 9 schließt eine Schneideeinrichtung 14 oder eine Haspeleinrichtung (nicht dargestellt) an.

Der zwischen den Walzen 4 gebildete Strang hat vorzugsweise eine Dichte von 2,4 bis 2,8 g/cm3 und wird im Durchlaufheiztunnel 6 auf eine Mindesttemperatur von 600°C erhitzt, wobei das Stranginnere eine Temperatur von mindestens 600°C und die Strangoberfläche eine für das Zusammensintern der Späne zweckmäßige Temperatur von etwa 1700°C erreichen soll. Von den Walzen 8 wird der im Durchlaufheiz-

- 8 -

tunnel 6 weichgeglühte und oberflächlich zusammengesinterte Strang bis auf eine Dichte von bevorzugt 3,3 bis 3,7g/cm3 weiter verdichtet. Beim Austritt aus der Kühlstrecke 9 hat der Strang eine Temperatur von höchstens etwa 400°C und wird dann von der Schneideinrichtung 14 in Stücke gewünschter Länge geschnitten bzw. aufgehaspelt.

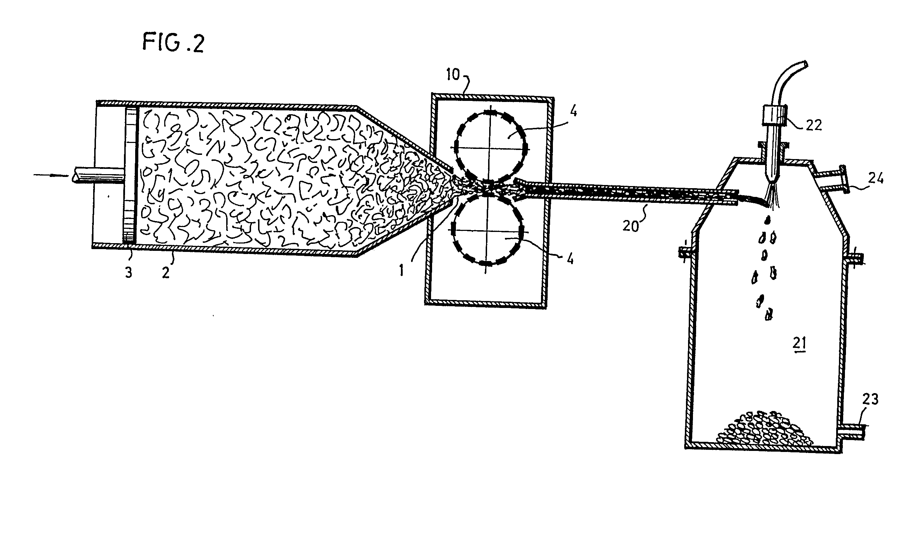

Bei der Anlage nach Fig.2 schließt an die Walzen 4 ein Führungsrohr 20 mit dem Spalt zwischen den Walzen 4 entsprechendem Querschnitt an. Das Führungsrohr 20 mündet oben seitlich in einen unter Überdruck von Schutzgas stehenden Reaktor 21 ein. Der Reaktor 21 weist in seinem Oberteil einen mit Argon oder Helium betriebenen Plasmabrenner 22 auf, dessen Plasmastrahl auf den aus dem Führungsrohr 20 austretenden Strang gerichtet ist und diesen abschmilzt. Statt des Plasmabrenners 22 kann auch eine Stabelektrode zur Bildung eines auf den Strang gerichteten Lichtbogens vorgesehen sein und dient im letzteren Fall eine - ansonsten abgeschlossene - Öffnung 23 als Einlaß für Schutzgas. Der Reaktor 21 hat an seinem Oberteil ein nach außen gasdichtes Sichtfenster 24, welches auch die gasdichte Einführung eines Temperaturmeßgerätes zuläßt. Er weist im übrigen einen an den Oberteil gasdicht angeschlossenen Unterteil auf, der aus einer Cu Cr Mg-Legierung besteht und außen wassergekühlt ist. Der Unterteil des Reaktors 21 kann zur Entleerung vom Oberteil abgenommen werden. Das Führungsrohr 20 mündet einenends gasdicht in den Reaktor 21 und andernends in die, die Walzen 4 umgebende Kammer 10 ein. Es steht somit die gesamte Anlage über den Pressenraum 2 bis zum Reaktor 21 unter leichtem Überdruck von Schtzgas, so daß keine Luft von außen eindringen kann.

Vor der Inbetriebsetzung der Anlage ist diese mit Schutzgas zu spülen, wobei das Schutzgas bei der Öffnung 23 als auch beim Plasmabrenner 22 in den Reaktor 21 einströmen kann.

Der zwischen den Walzen 4 gebildete Strang hat vorzugsweise eine Dichte von 2,4 bis 2,8g/cm3. Diese Dichte bleibt auch nach dem Austreten des Stranges aus dem Führungsrohr 20 bis zum Aufschmelzen durch den Plasmastrahl im Reaktor 21 erhalten, weil die Hitze des Plasmastrahles schon beim Austritt des Stranges aus dem Führungsrohr 20 wirksam wird und vor dem Aufschmelzen ein Weichglühen des Stranges bewirkt.

Wenn die Schmelzentropfen schmelzflüssig bis zum wassergekühlten Boden des Reaktors 21 gelangen, erstarren sie erst dort und kleben an der dort schon erstarrten Schmelze fest. Es bildet sich ein zusammenhängender Kuchen, der nach dem Abkühlen und nach Abnehmen des Unterteiles des Reaktors 21 aus diesem gekippt werden kann.

Wenn der Reaktor eine ausreichende Höhe hat oder durch Prallbleche bzw. durch eine Gegenstromkühlung mit Schutzgas für eine ausreichende Kühlung der Schmelzentropfen gesorgt wird, erstarren diese vor dem Auftreffen auf dem Boden des Reaktors bzw. auf dem dort schon befindlichen erstarrten Titanmaterial. In diesem Fall fällt das aufbereitete Titan in Form von Granulat an.

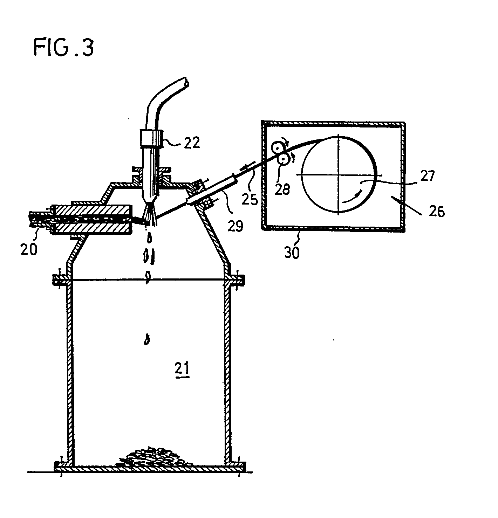

Bei der in Fig.3 gezeigten Variante der Anlage nach Fig.2 kann im Reaktor 21 ein Metallstrang, z.B. ein Eisendraht 25, zugeführt werden. Die Zuführeinrichtung 26 besteht aus einer Haspel 27, von welcher der Eisendraht 25 abgespult werden kann, sowie aus zwei Treibrollen 28 und einem Zuführrohr 29. Die Haspel 27 und die Treibrollen 28 sind in einer Kammer 30 eingeschlossen, die über das Zuführrohr 29 gasdicht an den Reaktor 21 angeschlossen ist. Der Eisendraht 25 kann damit dem Plasmastrahl des Plasmabrenners 22 zugeführt und gemeinsam mit den Titanspänen im Reaktor 21 geschmolzen werden. Über die Zufuhrgeschwindigkeit des Eisendrahtes kann der Eisengehalt im am Boden des Reaktors anfallenden Ferrotitan gesteuert werden.

0153296

- 10 -

Patentansprüche

1. Verfahren zum Aufbereiten von Spänen aus der Bearbeitung von Titanwerkstücken für den nachfolgenden schmelzmetallurgischen Einsatz, wobei die Titanspäne in einem Pressenraum mechanisch verdichtet werden, d a d u r c h  g e k e n n z e i c h n e t, daß die Titanspäne im Durchlauf durch den trichterartig in einen Schlitz mündenden Pressenraum vorverdichtet und nach den Austreten aus dem Schlitz zwischen gegenläufigen Walzen eingezogen und im Walzenspalt zu einem Strang mit einer Dichte von 1,5 bis 3,5 g/cm3, vorzugsweise 2,4 bis 2,8 g/cm3, gepreßt werden.

2. Verfahren nach Anspruch 1, d a d u r c h  g e k e n n z e i c h - n e t , daß zur Herstellung von Schmelzenbehandlungs- bzw. Legierungszusatz- oder Sonderdesoxidationsmitteln, welche neben Titan weitere Elemente, z.B. Bor und/oder Zirkon, enthalten, die Titanspäne vor der Verdichtung mit einem Schlamm in Berührung gebracht werden, der die gewünschten Zusatzelemente in Pulverform suspendiert in einem Bindemittel enthält.

3. Verfahren nach Anspruch 1 oder 2, d a d u r c h  g e k e n n - z e i c h n e t , daß der Strang unter Schutzgas auf eine Mindesttemperatur von 600°C erhitzt und bei dieser Temperatur zwischen weiteren gegenläufigen Walzen bis zu einer Dichte von 3,0 bis 4,4 g/cm3, vorzugsweise 3,3 bis 3,8 g/cm3, weiter verdichtet und erst nach einer Abkühlung wenigstens auf etwa 400°C aus der Schutzgasathmosphäre heraustritt und aufgehaspelt oder in Teile der für den schmelzmetallurgischen Einsatz benötigten Länge geschnitten wird (Fig.1).

4. Verfahren nach Anspruch 1 oder 2, d a d u r c h  g e k e n n - z e i c h n e t , daß der Strang einem unter Schutzgas stehenden Reaktor (21) seitlich zugeführt und dort mittels eines auf ihn gerichteten Plasmastrahles oder Lichtbogens geschmolzen wird und die Schmelzentropfen zum Boden des Reaktors fallen (Fig.2).

5. Verfahren nach Anspruch 4, d a d u r c h g e k e n n - z e i c h n e t , daß zur Herstellung von Schmelzenbehandlungs- bzw. Legierungszusatz- oder Sonderdesoxidationsmitteln, welche neben Titan weitere Metalle enthalten, z.B. von Ferrotitan, dem Plasmastrahl oder Lichtbogen ein gemeinsam mit den Titanspänen im Reaktor (21) zu schmelzender Metallstrang, z.B. ein Eisendraht oder -band, zugeführt wird (Fig.3).

6. Verfahren nach Anspruch 4 oder 5, d a d u r c h g e k e n n - z e i c h n e t , daß die Schmelze am Boden des Reaktors (21) erstarren gelassen und ein zusammenhängender Metallkuchen hergestellt wird.

7. Verfahren nach Anspruch 4 oder 5, d a d u r c h g e k e n n - z e i c h n e t , daß die Schmelzentropfen während des Falls zum Boden des Reaktors (21) erstarren gelassen werden und ein loses Granulat des Metalls hergestellt wird.

8. Anlage zum Aufbereiten von Spänen aus der Bearbeitung von Titanwerkstücken für den nachfolgenden schmelzmetallurgischen Einsatz nach einem der Ansprüche 1 bis 7, mit einem Pressenraum zum Ver- dichten der Späne, d a d u r c h g e k e n n z e i c h n e t , daß der Pressenraum (2) trichterartig in einen Schlitz (1) mündet und daran gegenläufige Walzen (4) mit einem Mitnehmerprofil (5) anschließen.

9. Anlage nach Anspruch 8, d a d u r c h g e k e n n z e i c h - n e t , daß an die Walzen (4) ein unter Schutzgas stehender Durchlaufheiztunnel (6) und an diesen weitere gegenläufige Walzen (8) und eine Kühlstrecke (9) anschließen, wobei die gesamte Anlage über den Pressenraum (2) bis zur Kühlstrecke (9) unter Überdruck von Schutzgas steht (Fig.1).

10. Anlage nach Anspruch 8, d a d u r c h g e k e n n z e i c h - n e t , daß an die Walzen (4) ein seitlich oben in einen Reaktor (21) einmündendes Führungsrohr (20) für den zwischen den Walzen (4) gebildeten Strang anschließt, wobei der Reaktor (21) unter Überdruck von Schutzgas steht, einen Plasmabrenner (23) oder eine Stabelektrode zur Ausbildung eines auf den Strang gerichteten Plasmastrahles bzw. Lichtbogens und einen gekühlten Unterteil aufweist, welcher das vom seitlich oben zugeführten Strang abschmelzende Metall aufnimmt und zur Entleerung vom daran dicht anschließenden Oberteil des Reaktors (21) abgenommen werden kann. (Fig.2)

11. Anlage nach Anspruch 10, d a d u r c h   g e k e n n - z e i c h n e t , daß an den Reaktor (21) eine Zuführeinrichtung (26) für einen Metallstrang, z.B. für einen Eisendraht (25) oder für ein Eisenband, angeschlossen ist (Fig.3).

FIG.1

FIG.2

FIG.3